# EUROPÄISCHE PATENTSCHRIFT

(11) **EP 2 022 842 B1**
(45) Veröffentlichungstag und Bekanntmachung des Hinweises auf die Patenterteilung: **19.10.2011**
(21) Anmeldenummer: 07015203.8
(22) Anmeldetag: 02.08.2007
(51) Int. Cl.: C12C 7/06

(54) **Maischgefässboden**
Bottom of mashing tank
Fond de cuve de trempage

(43) Veröffentlichungstag der Anmeldung: 11.02.2009
(73) Patentinhaber: Krones AG, 93073 Neutraubling (DE)
(72) Erfinder: Held, Erwin, 84036 Kumhausen (DE)
(74) Vertreter: Grünecker, Kinkeldey, Stockmair & Schwanhäusser

(56) Entgegenhaltungen:
- WO-A-02/12433
- WO-A-02/092753
- DE-A1- 10 123 065
- DE-B3-102005 058 458
- DE-U1-202005 018 302
- FR-A- 2 520 751

## Beschreibung

Die Erfindung betrifft ein Maischgefäß gemäß dem Oberbegriff des Anspruchs 1.

Aus der Druckschrift WO 02/12433 A ist bereits ein Maischgefäß gemäß dem Oberbegriff des Anspruchs 1 bekannt. Dieses Maischgefäß zeigt ebenfalls bereits einen Boden, der vom Umfang aus betrachtet, schräg nach oben zuläuft, der jedoch nicht schräg gestellt ist, sondern horizontal eingepasst ist. Auch die Rührwerksachse verläuft hier entlang der Mittelachse des Maischgefäßes. Der Ablauf der Maische erfolgt über einen Ablauf in einer umlaufenden Rinne. Die Zuführung der Maische erfolgt über eine Leitung zur Mitte des Bodens hin.

Aus der DE 101 23 065 A1 ist ebenfalls bereits eine Maischevorrichtung bekannt mit einem vom Umfang aus sich nach unten verjüngenden Boden, der zu einem Auslaufstutzen schräg verläuft, und eine Rührwerksachse eines Rührwerks aufweist, die im Wesentlichen entlang der Mittelachse des Gefäßes vertikal verläuft.

Auch aus der WO 02/092753 A ist bereits ein Maischgefäß mit einer Rühreinrichtung bekannt.

Aus der DE 20 2005 018 302 U1 ist bereits eine Maischvorrichtung bekannt, bei der Rührflügelblätter dezentral an der Befestigungsnabe der Rührwerkswelle angeordnet sind.

Aus der DE 10 2005 058 458 B3 ist bereits ein Maischgefäß bekannt, wobei an den Flügelflächen Vibrationselemente angeordnet sind.

Aus der FR-A-2 520 751 ist bereits ein Weinbereitungstank bekannt.

Das Maischen ist ein wichtiger Vorgang bei der Würzeherstellung. Die Aufgabe des Maischprozesses liegt in einem bestmöglichen Vermischen des Schrotes und des Maischwassers. Die im Malz vorhandenen gewünschten Inhaltsstoffe sollen optimal in Lösung gebracht werden.

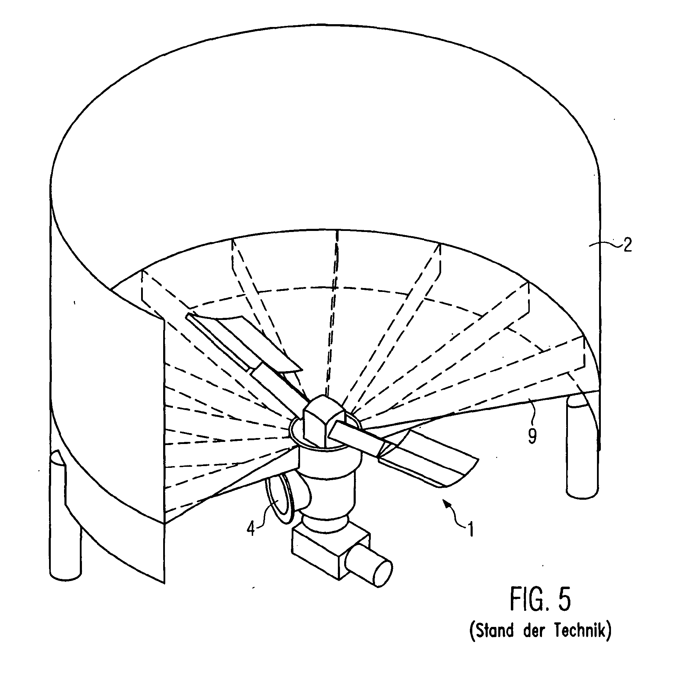

Die bekannten Maischgefäße, wie z. B. Maischpfannen oder Maischbottiche, weisen einen kegelförmigen Boden auf, der sich nach unten verjüngt. Zur besseren Durchmischung ist ein Rührwerk vorgesehen. Oft ist der Boden auch als Heizfläche ausgebildet. In Fig. 5 ist ein Maischgefäß ohne Dunstabzug schematisch dargestellt, wie es aus dem Stand der Technik bekannt ist. Die Maische bzw. Reinigungslösungszufuhr und -abfuhr befindet sich in der Mitte des Bottichs. Der konventionelle Boden 9 weist eine aufwändige Konstruktion auf, wobei eine Vielzahl von sich radial erstreckenden Querstreben nötig sind. In der Mitte des Bottiches ist das Rührwerk 1 vorgesehen, das hier zwei sich radial nach außen erstreckende Rührflügel umfasst.

Es hat sich herausgestellt, dass die Durchmischung der Maische im oberen Bereich des Bottichs unzureichend ist. Dies ist insbesondere bei hochviskosen Maischen, wie sie bei High-Gravity-Verfahren verwendet werden, der Fall.

Darüber hinaus ergibt sich der Nachteil, dass für kleine Teilmaischemengen auch der Boden des Maischebottichs beheizbar sein muss. Außerdem ist bei sehr kleinen Maischemengen eine Durchmischung durch die umlaufenden Arme des Rührwerks 1 nicht möglich, da die Arme nicht effektiv im unteren konisch zulaufenden Bereich wirken. Im unteren Bereich des Bottichbodens muss darüber hinaus eine Auslaufschüssel vorgesehen sein, so dass die Konstruktion des Maischgefäßes kompliziert ist. Außerdem ist es von Nachteil, dass sich die Maische in der Auslaufschüssel absetzt.

Hiervon ausgehend liegt der vorliegenden Erfindung die Aufgabe zugrunde, ein Maischegefäß bereitzustellen, das einen sehr einfachen Aufbau aufweist und auch hochviskose Maischen oder kleine Teilmaischemengen zuverlässig durchmischt.

Erfindungsgemäß wird diese Aufgabe durch die Merkmale des Anspruchs 1 gelöst.

Das erfindungsgemäße Maischegefäß erlaubt eine gute Durchmischung der Maischen. Der Boden kann einfach realisiert werden und bedarf keiner aufwändigen Verstrebung. Dadurch, dass der Boden im Vergleich zum Stand der Technik umgekehrt eingesetzt ist, und darüber hinaus noch unter einem bestimmten Winkel in Richtung zur Mittelachse des Gehäuses eingesetzt ist, verläuft die Umfangskante des Bodens in einer Ebene, die zur Horizontalebene geneigt ist. Unter Horizontalebene ist hier die Ebene zu verstehen, die senkrecht zu der Gefäßwandung steht. Das heißt, dass die Maische gut vom tieferen Bereich aus ablaufen kann, ohne dass Maischereste im Maischegefäß verbleiben. Dadurch, dass der Boden vom Umfang aus betrachtet schräg in Richtung Mittelachse L des Gehäuses nach oben verläuft, ergibt sich unterhalb des Bodens ein Hohlraum, der Platz für weitere Elemente bietet. Die Wellenabdichtung (Stopfbuchse) des Rührwerks kann direkt im obersten Bereich des Bodens, beispielsweise einer Kegelspitze eingeschweißt werden. Die bisherig verwendete Auslaufschüssel kann komplett entfallen. Die Bauhöhe des Gefäßes verkleinert sich, was gerade bei Sudhäusern mit niedriger Podesthöhe von Vorteil ist.

Gemäß der vorliegenden Erfindung ist die Rührwerkachse unter einem Winkel zur Mittelachse L des Gehäuses geneigt, wobei vorzugsweise der Winkel α, unter dem die Rührwerkachse zur Mittelachse L geneigt ist, dem Winkel α entspricht, unter dem der Boden geneigt ist. Zumindest aber sind Rührwerkachse und Boden in die gleiche Richtung geneigt. Dadurch, dass die Rührwerkwelle schief steht, ergibt sich eine erheblich bessere Rührwirkung in Kombination mit dem schräg stehenden Boden.

Gemäß einer bevorzugten Ausführungsform ist der Boden als ein sich nach oben verjüngender Kegel oder Kegelstumpf ausgebildet, dessen Grundfläche die Mittelachse des Gehäuses unter einem Winkel 120° > γ > 90° schneidet und oval ist. Ein solcher Boden kann besonders einfach gefertigt werden.

Vorteilhafterweise umfasst das Rührwerk mindestens einen sich radial nach außen erstreckenden Arm. Dabei verläuft der mindestens eine Arm nach unten und ist vorzugsweise im Wesentlichen parallel zur Oberfläche des Bodens um die Rührwerkachse umlaufend angeordnet. Mit einer solchen Konstruktion kann die Rührwirkung weiter verbessert werden. Es können hierzu konventionelle Rührflügel verwendet werden, die einfach nach unten gezogen werden, so dass herkömmliche Bauteile verwendet werden können und sich keine bedeutende konstruktive Änderung des Rührwerks ergibt.

Die vorliegende Erfindung ermöglicht, dass der Boden unbeheizt ist, was erhebliche konstruktive Vorteile mit sich bringt. Sehr kostengünstig kann nämlich eine Heizung am Umfang im oder am Gehäuse angeordnet werden. Insbesondere dann, wenn die Heizung rund um den Wirkbereich des Rührwerks angeordnet ist, können auch sehr kleine Teilmaischmengen gut erhitzt werden. Unter Wirkbereich des Rührwerks versteht man hier den Bereich zwischen Boden und dem oberen Ende der Rührflügel.

Wenn die Heizung mehrere unabhängig voneinander regelbare, übereinander angeordnete Heizabschnitte aufweist, kann gezielt in Abhängigkeit der Maischmenge geheizt werden. Verwendet man beispielsweise nur kleine Teilmaischmengen, so ist es ausreichend, wenn in einem Bereich des Wirkbereichs des Rührwerks geheizt wird. Unbefüllte Bereiche des Bottichgehäuses werden dann nicht geheizt.

Es ist vorteilhaft, wenn die kegelförmige oder kegelstumpfförmige Bodenfläche unter einem Winkel β von 5 bis 30° zur Kegelgrundfläche geneigt ist, da der Boden dann selbsttragend ist. Eine besonders gute Stabilität ergibt sich in einem Winkelbereich β von 10°-20°.

In besonders vorteilhafter Weise erlaubt der erfindungsgemäße Boden, dass der Zulauf für die Maische nicht mehr im Inneren des Gehäuses vorgesehen ist, sondern seitlich im Gehäuse ,insbesondere im Wirkbereich des Rührwerks angeordnet ist. Der Zulauf kann auch von unten durch den Boden verlaufen oder von oben durch ein Zulaufrohr, das im Bereich der Seitenwand nach unten läuft. Somit wird die Verrohrung deutlich einfacher, da Eintritte z. B. von der Mühle am Umfang verteilt werden können.

Der Maischeablauf kann vorteilhafterweise im Boden an der tiefsten Stelle des geneigten Bodens angeordnet sein, so dass die Maische, oder aber auch beispielsweise Reinigungsflüssigkeit, gut ablaufen kann.

Vorzugsweise liegt der Winkel α in einem Bereich von 4° - 10°.

Die vorliegende Erfindung wird nachfolgend unter Bezugnahme folgender Figuren näher erläutert.
- Fig. 1: zeigt einen Längsschnitt durch einen Teil eines erfindungsgemäßen Maischgefä- ßes.
- Fig. 2: zeigt ebenfalls grob schematisch einen Teilschnitt eines Maischgefäßes gemäß einem weiteren Ausführungsbeispiel der vorliegenden Erfindung.
- Fig. 3a, b, c: zeigen mögliche Formen des Bodens gemäß der vorliegenden Erfindung.
- Fig. 4: zeigt grobschematisch eine Seitenansicht des erfindungsgemäßen Maischgefäßes
- Fig. 5: zeigt in perspektivischer Darstellung einen Maischebottich, wie er aus dem Stand der Technik bekannt ist.

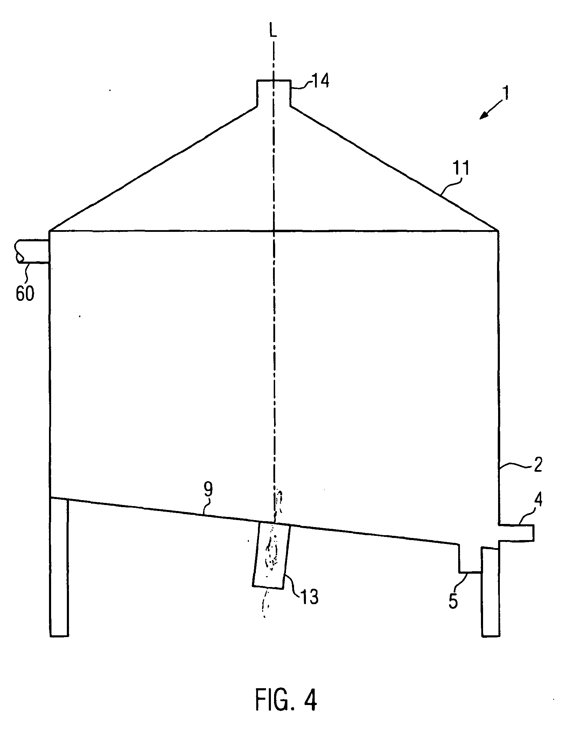

Fig. 4 zeigt grobschematisch die Seitenansicht eines Maischegefäßes 1, das heißt, eines Maischebottichs oder einer Maischepfanne gemäß der vorliegenden Erfindung. Das Maischegefäß 1 weist ein Gehäuse 2 auf, das hier in wesentlichen hohlzylindrisch ausgebildet ist. Das Gehäuse 2 umfasst einen Boden 9, der nachfolgend noch näher erläutert wird. Weiter weist das Maischegefäß 1 eine Dunsthaube 11 sowie ein Dunstrohr 14 auf. Ferner weist das erfindungsgemäße Maischegefäß einen Antrieb 13 für ein Rührwerk auf sowie einen Zulauf 4 und einen Ablauf 5 für Maische und/oder Reinigungsflüssigkeit. Optional kann auch ein Zulauf 60 für Maische, insbesondere für Trockenschrot im oberen Bereich des Maischgefäßes 1 angeordnet sein.

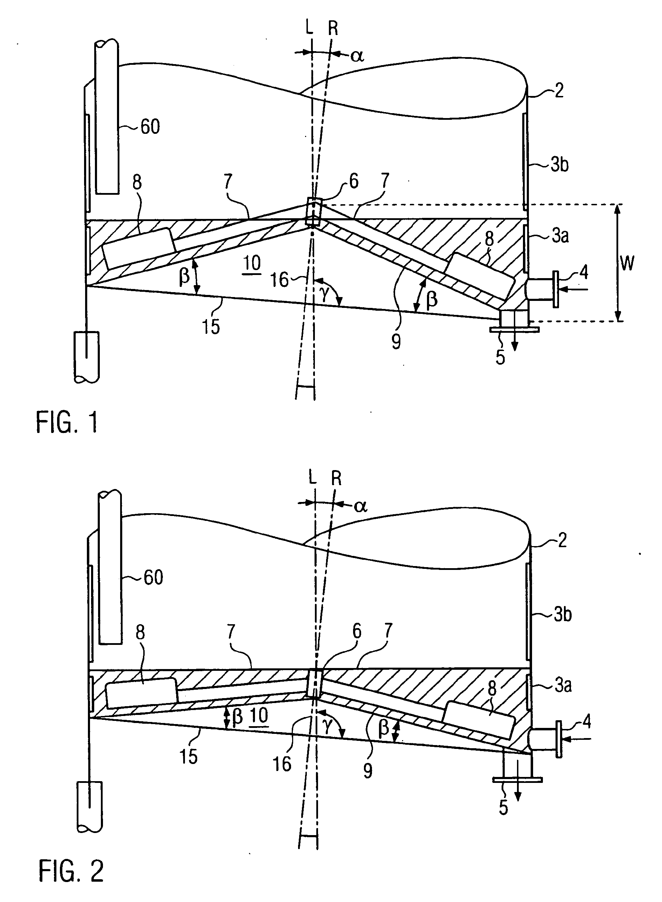

Fig. 1 zeigt einen Teilschnitt durch das Gehäuse 2 des erfindungsgemäßen Maischegefäßes gemäß einem ersten Ausführungsbeispiel der vorliegenden Erfindung.

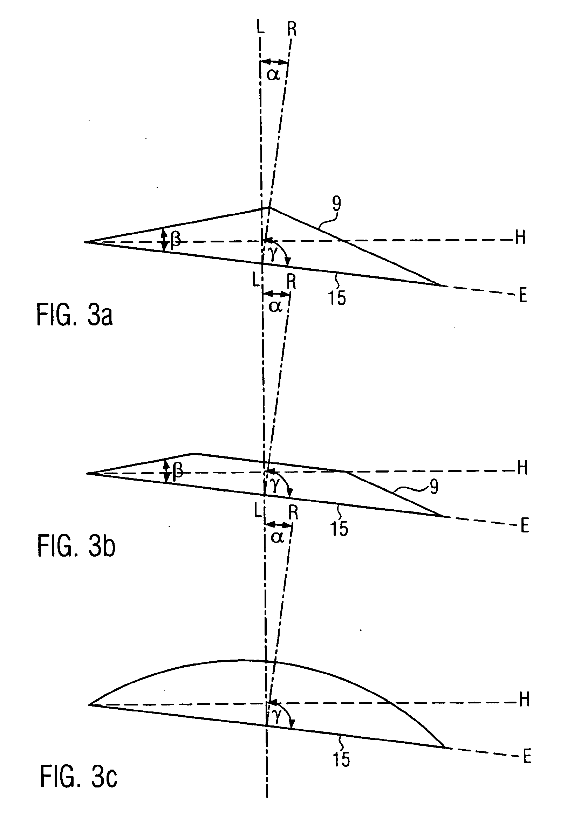

Fig. 1 zeigt, dass der Boden 9 derart ausgebildet ist, dass er vom Umfang 15 aus betrachtet, schräg in Richtung Mittelachse L des Gehäuses 2 nach oben, d.h. in Richtung Dunsthaube zuläuft. Darüber hinaus ist der Boden 9 unter dem Winkel α zur Mittelachse L schräg in das Gehäuse 2 eingesetzt und eingeschweißt. Der Winkel α liegt vorzugsweise in einem Bereich von 4 bis 10 Grad, hier bei etwa 5 Grad. Die Schrägstellung des Bodens 9 bringt mit sich, dass der Umfang 15, d.h. die untere Umfangskante, die in das Gehäuse 2 eingepasst ist, in einer zur Horizontalebene H geneigten Ebene E liegt (siehe hierzu auch Fig. 3 a).

In dem in Fig. 1 und 3a gezeigten Ausführungsbeispiel ist der Boden 9 als ein sich nach oben verjüngender Kegel ausgebildet, dessen offene Grundfläche die Mittelachse L des Gehäuses 2 unter einen Winkel von 120 > γ > 90 Grad schneidet und oval ist. Durch die Schrägstellung ergibt sich, dass die Maische auf eine Seite (in Fig. 1 zur rechten Seite) läuft, so dass ein Ablauf 5 für die Maische im Boden 9 an der tiefsten Stelle angeordnet ist. Der Kegel ist hier so ausgebildet, dass die kegelförmige Bodenmantelfläche unter einen Winkel β von 5 bis 30 Grad zur Kegelgrundfläche geneigt ist, wobei die Kegelgrundfläche offen ist, und durch die Umfangskante 15 begrenzt wird. Der Boden 9 ist vorzugsweise aus Edelstahlblech gefertigt. Unter dem Boden 9 ergibt sich der Hohlraum 10 in dem auch beispielsweise platzsparend der Antrieb für das Rührwerk 1 angeordnet werden kann.

Im Maischegefäß ist das Rührwerk 6 angeordnet. Das Rührwerk 6 wird von der Antriebswelle 16 über den Antrieb 13 (siehe Fig. 4), der in Fig. 1 nicht dargestellt ist, angetrieben. Ferner umfasst das Rührwerk 6 mindestens einen, hier zwei sich radial nach außen erstreckende Arme 7. Die Arme 7 weisen am äußeren Ende Rührflügel 8 auf, die zur besseren Durchmischung der Maische dienen. Die Arme 7 sind nach unten gerichtet und verlaufen vorzugsweise im wesentlichen parallel zur Oberfläche des Bodens 9. Dabei ist die Rührwerkachse R ,um die die Arme 7 rotieren, d.h. die Welle 16 ,ebenfalls zur Längsachse L des Gehäuses 2 um einen bestimmten Winkel schräggestellt. Vorzugsweise ist die Rührwerksachse R ebenfalls unter dem Winkel α zur Längsachse L geneigt, unter dem auch der Boden 9 schräg in das Gehäuse 2 eingesetzt ist. Die Wellenabdichtung (Stopfbuchse) kann direkt in die Kegelspitze eingeschweißt werden. Dadurch, dass auch die Rührwerkswelle schief steht, entsteht eine erheblich bessere Rührwirkung.

Im Wirkbereich W des Rührwerks 6 ist der Maischezulauf 4 vorgesehen, über den Maische dem Gefäß zum Einmaischen zugeführt wird. Anstelle des separaten Zulaufs 4 könnte auch der Ablauf 5 im Boden 9 als Zulauf verwendet werden, was die Vorrichtung noch weiter vereinfachen würde. Der Zulauf könnte jedoch auch oberhalb des Wirkbereichs W im Gehäuse angeordnet sein. Eine weitere Möglichkeit bestünde darin, den Zulauf als ein von oben in das Gehäuse eintretendes ,an dem Gehäuse nach unten verlaufendes Zulaufrohr 60 zu realisieren. Eine solche Lösung ist insbesondere für Trockenschrot geeignet. Unter dem Wirkbereich W des Rührwerks 6 versteht man den Bereich, vom oberen Ende der Rührflügel bis zum Boden 9. Dadurch, dass der Zulauf für die Maische nicht mehr im Inneren des Gehäuses vorgesehen ist, sondern seitlich im Gehäuse im Wirkbereich des Rührwerks angeordnet ist, kann die Verrohrung deutlich vereinfacht werden, da Eintritte, z.B. von der Mühle am Umfang verteilt werden können.

Das Maischegefäß 1 weist weiter eine Heizung 3a, 3b auf, die am Umfang in oder am Gehäuse 2 angeordnet ist. Dabei ist die Heizung vorzugsweise zumindest in einem Teilbereich des Wirkbereichs W des Rührwerks angeordnet, so dass auch sehr kleine Teilmaischemengen mit der Heizzarge aufgeheizt werden können. Ein beheizter Boden ist nicht notwendig. Es ist auch möglich wie aus Fig. 1 hervorgeht, dass die Heizung mehrere unabhängig voneinander regelbare übereinander angeordnete Heizabschnitte 3a, 3b aufweist, so kann gezielt in Abhängigkeit der Maischemenge geheizt werden. Verwendet man beispielsweise nur kleine Teilmaischmengen wie in Fig. 1 gezeigt ist, so ist es ausreichend, wenn zumindest in einem Teilbereich des Wirkbereichs W des Rührwerks geheizt wird.

Fig. 2 zeigt eine weitere Ausführungsform gemäß der vorliegenden Erfindung, die dem in Fig. 1 gezeigten Ausführungsbeispiel entspricht, mit der Ausnahme, dass der Winkel β der kegelförmigen Bodenfläche 9 unter einem Winkel von 10 Grad zur Kegelgrundfläche, die geöffnet ist, geneigt ist.

Die Form des sich in Richtung Mittelachse des Gehäuses nach oben verjüngenden Bodens ist selbstverständlich nicht auf die in Fig. 1 und 2 sowie Fig. 3a gezeigte Kegelform beschränkt. Wie aus Fig. 3b hervorgeht, kann der Boden 9 auch als ein sich nach oben verjüngender Kegelstumpf ausgebildet sein, dessen Grundfläche ebenfalls die Mittelachse L des Gehäuses unter einem Winkel 120° > γ > 90 °schneidet und der ebenfalls unter dem Winkel α zur Längsachse L geneigt ist. Die Rührwerksachse geht dabei ebenso durch die Mitte des Kegelstumpfes.

Wie in Fig. 3c gezeigt ist, kann die Bodenfläche 9 auch eine gekrümmte nach oben zulaufende Form aufweisen, die unter einem Winkel α geneigt zur Mittelachse L des Gehäuses in das Gehäuse eingesetzt ist, so dass die Umfangskante 15 des Bodens, ebenfalls in einer zur Horizontalebene H geneigten Ebene E liegt.

Wesentlich bei der Form des Bodens 9 ist lediglich, dass er vom Umfang aus betrachtet schräg nach oben zuläuft und der Umfang 15, an dem der Boden 9 in das Gehäuse eingesetzt ist in einer zur Horizontalebene H geneigten Ebene E liegt. Dabei muss sich der Boden nicht kontinuierlich oder stetig nach oben verjüngen, sondern kann auch Stufen aufweisen.

Gemäß der vorliegenden Erfindung können also auch ohne beheizten Boden kleinste Teilmaischen behandelt werden. Auch zähe hochviskose Maischen können gut durchmengt werden. Zusätzlich entsteht noch eine Kostenreduzierung durch die entfallende Auslaufschüssel. Die Verrohrung wird einfacher, da Eintritte, z.B. von der Mühle am Umfang verteilt werden können. Auch die Bauhöhe des Gefäßes verkleinert sich, was gerade bei Sudhäusern mit niedriger Podesthöhe von Vorteil ist.

## Patentansprüche

1. Maischegefäß (1) mit einem Gehäuse (2), das einen Boden (9) aufweist, sowie mit einem Rührwerk (6),
**dadurch gekennzeichnet, dass**
der Boden (9) derart ausgebildet ist, dass er vom Umfang aus betrachtet schräg in Richtung Mittelachse (L) des Gehäuses (2) nach oben zuläuft und unter einem bestimmten Winkel α geneigt zur Mittelachse (L) in das Gehäuse (2) eingesetzt ist, so dass die Umfangskante (15) des Bodens (9) in einer zur Horizontalebene (H) geneigten Ebene (F) liegt und die Rührwerksachse (R) unter einem Winkel zur Mittelachse (L) des Gehäuses (2) geneigt ist.

2. Maischegefäß nach Anspruch 1,
**dadurch gekennzeichnet, dass**
der Boden (9) als ein sich nach oben verjüngender Kegel oder Kegelstumpf ausgebildet ist, dessen Grundfläche die Mittelachse (L) des Gehäuses (2) unter einen Winkel 120° > γ > 90° schneidet und oval ist.

3. Maischegefäß nach mindestens einem der Ansprüche 1 bis 2,
**dadurch gekennzeichnet, dass**
die Rührwerksachse (R) unter dem gleichen Winkel α zur Mittelachse L wie der Boden (9) geneigt ist.

4. Maischegefäß nach mindestens einem der Ansprüche 1 bis 3,
**dadurch gekennzeichnet, dass**
das Rührwerk (1) mindestens einen sich radial nach außen erstreckenden Arm (7) umfasst.

5. Maischegefäß nach Anspruch 4,
**dadurch gekennzeichnet, dass**
der mindestens eine Arm (7) nach unten gerichtet ist und vorzugsweise im Wesentlichen parallel zur Oberfläche des Bodens (9) um die Rührwerkachse (R) umläuft.

6. Maischegefäß nach mindestens einem der Ansprüche 1 bis 5,
**dadurch gekennzeichnet, dass**
der Boden (9) unbeheizt ist.

7. Maischegefäß nach mindestens einem der Ansprüche 1 bis 6,
**dadurch gekennzeichnet, dass**
eine Heizung (3a, b) am Umfang in oder am Gehäuse (2) angeordnet ist.

8. Maischegefäß nach Anspruch 7,
**dadurch gekennzeichnet, dass**
die Heizung (3a, b) mehrere unabhängig voneinander regelbare, übereinander angeordnete Heizabschnitte aufweist.

9. Maischegefäß nach mindestens Anspruch 2,
**dadurch gekennzeichnet, dass**
die kegelförmige oder kegelstumpfförmige Fläche des Bodens (9) unter einem Winkel β von 5 bis 30°,insbesondere unter einem Winkel β von 10-20 °, zur Kegelgrundfläche geneigt ist.

10. Maischegefäß nach mindestens einem der Ansprüche 1 bis 9,
**dadurch gekennzeichnet, dass**
der Zulauf (4) für die Maische seitlich im Gehäuse (2), insbesondere im Wirkbereich (W) des Rührwerks (1), oder im Boden (9) angeordnet ist, oder als ein von oben, innen am Gehäuse (2) ,nach unten verlaufendes Zulaufrohr (60) ausgebildet ist.

11. Maischegefäß nach mindestens einem der Ansprüche 1 bis 10,
**dadurch gekennzeichnet, dass**
der Maischeablauf (5) im Boden (9) an der tiefsten Stelle des geneigten Bodens (9) angeordnet ist.

12. Maischgefäß nach mindestens einem der Ansprüche 1 bis 11,
**dadurch gekennzeichnet, dass**
der Winke α in einem Bereich von 4° - 10° liegt.

13. Maischgefäß nach Anspruch 7,
**dadurch gekennzeichnet, dass**
ein Teil der Heizung (3a) in einem Bereich des Wirkbereichs (W) des Rührwerks (6) angeordnet ist.

## Claims

1. Mash vessel (1) with a housing (2) which has a base (9), and with a stirring unit (6),
**characterised in that**
the base (9) is configured such that, viewed from the periphery, it runs upwards at an angle in the direction of the centre axis (L) of the housing (2) and is inserted into the housing (2) at a certain angle α inclined to the centre axis (L) so that the peripheral edge (15) of the base (9) lies on a plane (F) inclined to the horizontal plane (H) and the stirring unit axis (R) is inclined at an angle to the centre axis (L) of the housing (2).

2. Mash vessel according to claim 1,
**characterised in that**
the base (9) is configured as a cone or truncated cone tapering upwards, the base area of which intersects the centre axis (L) of the housing (2) at an angle of 120° > γ > 90° and is oval.

3. Mash vessel according to at least one of claims 1 to 2,
**characterised in that**
the stirring unit axis (R) is inclined at the same angle α to the centre axis L as the base (9).

4. Mash vessel according to at least one of claims 1 to 3,
**characterised in that**
the stirring unit (1) comprises at least one arm (7) extending radially outwards.

5. Mash vessel according to claim 4,
**characterised in that**
at least one arm (7) is directed downwards and preferably circulates substantially parallel to the surface of the base (9) on the stirring unit axis (R)

6. Mash vessel according to at least one of claims 1 to 5,
**characterised in that**
the base (9) is unheated.

7. Mash vessel according to at least one of claims 1 to 6,
**characterised in that**
a heater (3a, b) is arranged on the periphery in or on the housing (2).

8. Mash vessel according to claim 7,
**characterised in that**
the heater (3a, b) has a plurality of heating sections arranged on top of one another that can be controlled independently of one another.

9. Mash vessel according to at least claim 2,
**characterised in that**
the cone-shaped or truncated cone-shaped area of the base (9) is inclined to the base area of the cone at an angle β of 5 to 30°, in particular at an angle β of 10 - 20°.

10. Mash vessel according to at least one of claims 1 to 9,
**characterised in that**
the inlet (4) for the mash is arranged on the side in the housing (2), in particular in the effective range (W) of the stirring unit (1), or in the base (9), or is configured as a feed pipe (60) running from top, inside on the housing (2), to bottom.

11. Mash vessel according to at least one of claims 1 to 10,
**characterised in that**
the mash discharge (5) in the base (9) is arranged at the lowest point of the inclined base (9).

12. Mash vessel according to at least one of claims 1 to 11,
**characterised in that**
the angle β is in the range of 4° - 10°.

13. Mash vessel according to claim 7,
**characterised in that**
part of the heater (3a) is arranged in a range of the effective range (W) of the stirring unit (6).

## Revendications

1. Cuve d'empâtage (1) avec une enveloppe (2) qui présente un fond (9), et avec un mélangeur (6),
**caractérisée en ce que** le fond (9) est conçu de telle sorte qu'il s'étend en biais vers le haut, vu de sa circonférence, en direction de l'axe central (L) de l'enveloppe (2), et qu'il est placé dans l'enveloppe (2) en étant incliné suivant un angle défini α par rapport à l'axe central (L), de sorte que le bord périphérique (15) du fond (9) est situé dans un plan (E) incliné par rapport au plan horizontal (H) et que l'axe de mélangeur (R) est incliné suivant un certain angle par rapport à l'axe central (L) de l'enveloppe (2).

2. Cuve d'empâtage selon la revendication 1, **caractérisée en ce que** le fond (9) est conçu comme un cône ou un tronc de cône qui va en s'effilant vers le haut et dont la surface de base coupe l'axe central (L) de l'enveloppe (2) suivant un angle 120°>γ>90° et est ovale.

3. Cuve d'empâtage selon l'une au moins des revendications 1 à 2, **caractérisée en ce que** l'axe de mélangeur (R) est incliné par rapport à l'axe central (L) suivant le même angle α que le fond (9).

4. Cuve d'empâtage selon l'une au moins des revendications 1 à 3, **caractérisée en ce que** le mélangeur (6) comprend au moins un bras (7) qui s'étend radialement vers l'extérieur.

5. Cuve d'empâtage selon la revendication 4, **caractérisée en ce que** le ou les bras (7) sont dirigés vers le bas et tournent sur l'axe de mélangeur (R) de préférence globalement parallèlement à la surface du fond (9).

6. Cuve d'empâtage selon l'une au moins des revendications 1 à 5, **caractérisée en ce que** le fond (9) est non chauffé.

7. Cuve d'empâtage selon l'une au moins des revendications 1 à 6, **caractérisée en ce qu'**un chauffage (3a, b) est disposé, sur la périphérie, dans ou sur l'enveloppe (2).

8. Cuve d'empâtage selon la revendication 7, **caractérisée en ce que** le chauffage (3a, b) comporte plusieurs sections de chauffage aptes à être réglées indépendamment et superposées.

9. Cuve d'empâtage selon la revendication 2, **caractérisée en ce que** la surface conique ou tronconique du fond (9) est inclinée par rapport à la surface de base du cône suivant un angle β de 5 à 30°, en particulier suivant un angle β de 10 à 20°.

10. Cuve d'empâtage selon l'une au moins des revendications 1 à 9, **caractérisée en ce que** l'amenée (4) pour le brassin est disposée sur le côté dans l'enveloppe (2), en particulier dans la zone active (W) du mélangeur (1), ou dans le fond (9), ou est conçue comme un tuyau d'amenée (60) qui s'étend du haut, en particulier sur l'enveloppe (2), vers le bas.

11. Cuve d'empâtage selon l'une au moins des revendications 1 à 10, **caractérisée en ce que** l'écoulement de brassin (5) est disposé dans le fond (9) à l'endroit le plus bas du fond incliné (9).

12. Cuve d'empâtage selon l'une au moins des revendications 1 à 11, **caractérisée en ce que** l'angle α est situé dans une plage de 4° à 10°.

13. Cuve d'empâtage selon la revendication 7, **caractérisée en ce qu'**une partie du chauffage (3a) est disposée dans une zone de la zone active (W) du mélangeur (6).
